# EUROPÄISCHE PATENTSCHRIFT

(11) **EP 0 671 607 B1**
(45) Veröffentlichungstag und Bekanntmachung des Hinweises auf die Patenterteilung: **29.07.1998**
(21) Anmeldenummer: 94119943.2
(22) Anmeldetag: 16.12.1994
(51) Int. Cl.: G01D 5/26

(54) **Positionsmesseinrichtung**
Position-measuring device
Dispositif de mesure de positions

(30) Priorität: 02.03.1994 DE 4406798
(43) Veröffentlichungstag der Anmeldung: 13.09.1995
(73) Patentinhaber: Dr. Johannes Heidenhain GmbH, D-83292 Traunreut (DE)
(72) Erfinder: Affa, Alfred, D-.83371 Stein/Traun (DE)

(56) Entgegenhaltungen:
- EP-A- 0 110 059
- DE-A- 3 509 390
- DE-C- 3 918 490
- GB-A- 2 124 381
- Druckschrift der Firma Dr. Johannes Heidenhain GmbH "Gekapselte inkrementale Längenme systeme LS 706 und LS 706C"

## Beschreibung

Die Erfindung betrifft eine Positionsmeßeinrichtung gemäß dem Oberbegriff des Anspruches 1.

Derartige Positionsmeßeinrichtungen werden zur Messung der Relativlage zweier Bauteile einer Werkzeugmaschine oder einer Koordinatenmeßmaschine eingesetzt.

Aus der DE 25 05 587 C3 ist eine Längenmeßeinrichtung bekannt, bei der ein Trägerkörper zweckmäßig an den Enden mit gelenkartig ausgebildeten Befestigungselementen an einem der zu messenden Bauteile befestigt ist. Der Trägerkörper liegt zwischen den Befestigungselementen frei, wodurch Schwingungen ermöglicht werden, die die Meßgenauigkeit nachteilig beeinflussen.

Eine ähnlich ausgebildete Längenmeßeinrichtung ist in der DE 35 09 390 A1 beschrieben. Zusätzlich zu den elastischen Befestigungselementen an den Enden des Gehäuses sind weitere Befestigungselemente zwischen diesen Befestigungselementen angeordnet. Auch hier ist ersichtlich, daß das Gehäuse von dem zu messenden Objekt beabstandet befestigt ist, wodurch wiederum Schwingungen ermöglicht werden.

Die EP 0 110 059 B1 zeigt eine Längenmeßeinrichtung mit elastischen Befestigungselementen an den Enden des Gehäuses und mit einem weiteren Befestigungselement in der Mitte des Gehäuses, mit dem es starr an dem zu messenden Objekt befestigt ist. Auch hier liegt das Gehäuse im übrigen Bereich frei.

In der Druckschrift der Firma DR. JOHANNES HEIDENHAIN GmbH "Gekapselte inkrementale Längenmeßsysteme LS 706, LS 706 C", Juni 1993 - von der diese Erfindung ausgeht - ist eine gemäß der EP 0 110 059 B1 ausgebildete Längenmeßeinrichtung gezeigt. Im angebauten Zustand steht eine Fläche des Gehäuses mit einer Fläche des zu messenden Objektes in Kontakt. Durch diesen Kontakt und die somit zwangsläufig auftretende Haftreibung wird die freie Längsausdehnung des Gehäuses behindert, wodurch wiederum Meßfehler auftreten können.

Aufgabe der Erfindung ist es, eine Positionsmeßeinrichtung zu schaffen, bei der ungleiche thermische Eigenschaften des Trägerkörpers und des zu messenden Objektes, an das der Trägerkörper befestigt wird, praktisch keine Verfälschungen des Meßergebnisses hervorrufen und der Trägerkörper trotzdem relativ schwingungsfest befestigt ist.

Diese Aufgabe wird erfindungsgemäß durch die Merkmale des Anspruches 1 gelöst.

Die Vorteile der Erfindung bestehen darin, daß eine nahezu ungehinderte Längenausdehnung zwischen dem Trägerkörper und dem zu messenden Objekt erfolgen kann. Weiterhin ist eine stabile und schwingungsarme Befestigung gewährleistet. Dieser Vorteil kommt besonders bei langen Trägerkörpern mit den in der Praxis geforderten kleinen Querschnitten zum Tragen.

Vorteilhafte Ausbildungen sind in den abhängigen Ansprüchen angegeben.

Beispiele der Erfindung werden anhand der Zeichnungen näher erläutert.

Es zeigt
- Figur 1: eine Darstellung einer Längenmeßeinrichtung im Teilschnitt,
- Figur 2: einen Querschnitt der Längenmeßeinrichtung gemäß Figur 1 und
- Figur 3: einen Querschnitt des Auflagebereiches einer weiteren Längenmeßeinrichtung.

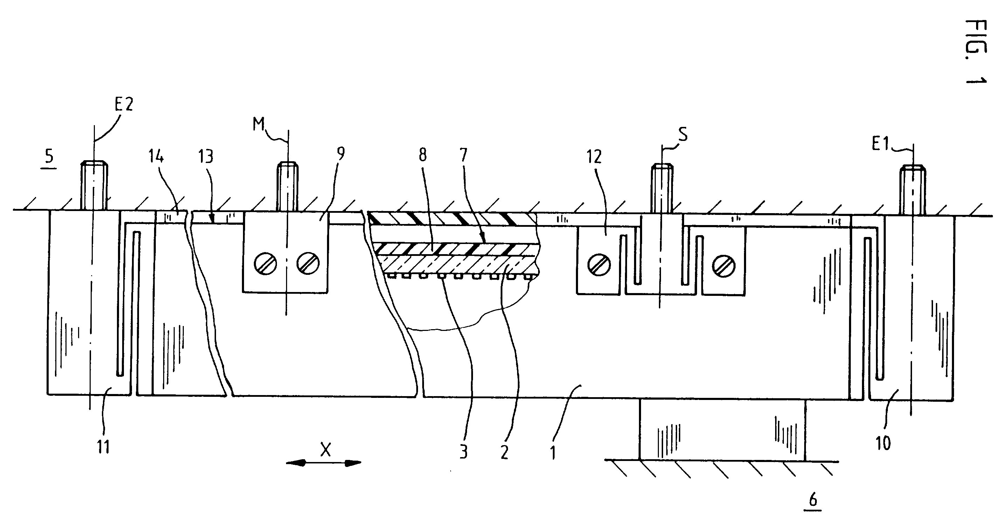

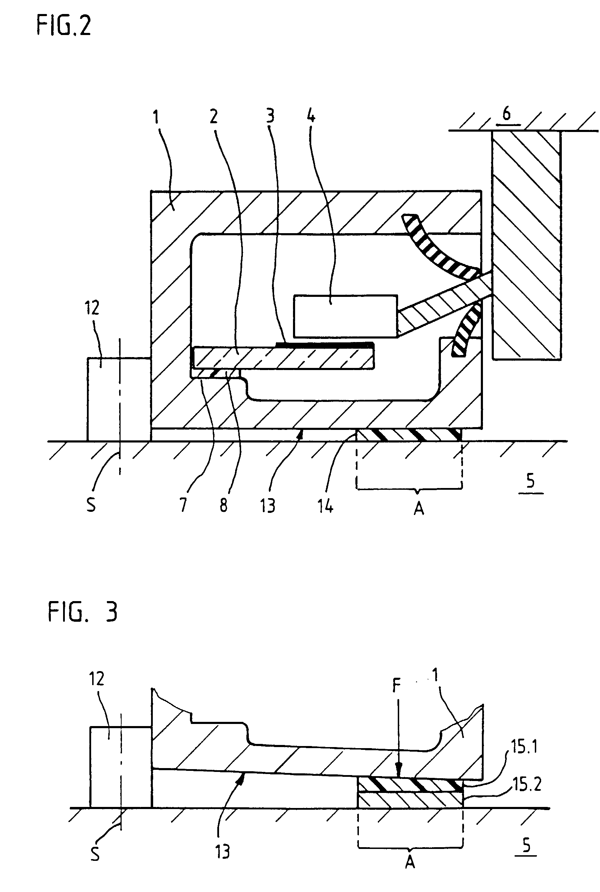

In den Figuren 1 und 2 ist eine gekapselte Längenmeßeinrichtung mit einem Gehäuse 1 als Trägerkörper für eine Maßverkörperung 2 gezeigt. Auf der Maßverkörperung 2 ist eine Teilung 3 aufgebracht, die von einer Abtasteinrichtung 4 photoelektrisch abgetastet wird. Das Gehäuse 1 ist ein Hohlkörper aus Aluminium, in dessen Innenraum die Maßverkörperung 2 aus Glas befestigt ist. Um die Relativbewegung zwischen zwei Objekten 5, 6 zu messen, ist das Gehäuse 1 an einem dieser Objekte 5 und die Abtasteinrichtung 4 am anderen Objekt 6 befestigt. Das eine Objekt ist beispielsweise der Schlitten 5 und das andere Objekt das Bett 6 einer Werkzeugmaschine.

An einer Innenfläche 7 des Gehäuses 1 ist die Maßverkörperung 2 mittels einer elastischen Klebeschicht 8 befestigt. Das Gehäuse 1 ist an einer Stelle - bevorzugt in seiner Mitte M - über ein erstes Befestigungselement 9 direkt und somit starr mit dem Schlitten 5 verbunden. Desweiteren ist das Gehäuse 1 im Bereich der beiden Enden El, E2 über Längenausgleichselemente 10, 11 am Schlitten 5 der Werkzeugmaschine befestigt. Zwischen dem starren Befestigungselement 9 und den Längenausgleichselementen 10, 11 können noch an weiteren Stellen S zusätzliche unterstützende Längenausgleichselemente 12 vorgesehen werden. Die Längenausgleichselemente 10, 11, 12 bewirken eine translatorische Lagerung der Endbereiche E1, E2 des Gehäuses 1 in Meßrichtung X, wogegen in der Mitte M ein Meßbezugspunkt erhalten bleibt.

Um Schwingungen des Gehäuses 1 zu vermeiden, stützt sich das Gehäuse 1 mit einer Seitenfläche 13 an einer Fläche des Schlittens 5 ab. In diesem Auflagebereich A ist das Gehäuse 1 mit einer hochelastischen Schicht - vorzugsweise einer Klebstoffschicht 14 - versehen. Durch diese Maßnahme ist eine sichere und stabile Abstützung des Gehäuses 1 an einer Fläche des Schlittens 5 gewährleistet, und trotzdem ist eine freie Längenausdehnung zwischen Gehäuse 1 und Schlitten 5 möglich. Bei temperaturbedingten Längenänderungen des Gehäuses 1 gegenüber dem Schlitten 5 treten keine - beispielsweise durch Haftreibung bedingten - Längskräfte auf, die zu Meßfehlern führen können.

Anstelle einer Klebstoffschicht 14 kann auch eine elastische Silikonschicht eingesetzt werden. Als hochelastische Schicht zwischen dem Gehäuse 1 und dem Schlitten 5 kann auch eine Klebefolie 15 Verwendung finden, wie in Figur 3 dargestellt ist. Die Klebefolie 15 besteht aus einer Klebstoffschicht 15.1 und einem Schutzpapier 15.2 als Gleitschicht. Die Klebefolie 15 wird mit der klebenden Fläche auf eine Fläche 13 des Gehäuses 1 geklebt, wodurch ein Auflagebereich A entsteht und die Oberfläche des Schutzpapiers 15.2 am Schlitten 5 anliegt.

In Figur 3 ist übertrieben dargestellt, daß das Gehäuse 1 verspannt befestigt wird, so daß im Auflagebereich A eine Auflagekraft F wirkt. Der Auflagebereich A ist dabei von den Befestigungsstellen M, S, El, E2 senkrecht zur Meßrichtung X beabstandet vorgesehen.

Die hochelastische Schicht 14, 15 ist in den dargestellten Beispielen streifenförmig in Längsrichtung X des Gehäuses 1 vorgesehen, so daß eine Teilfläche 13 des Gehäuses 1 von der Oberfläche des Schlittens 5 beabstandet ist.

Wird gemäß der Erfindung als hochelastische Schicht eine Klebstoffschicht 14 verwendet, können insbesondere bei kurzen Gehäusen 1 die separaten Längenausgleichselemente 12 und ggf. auch die Längenausgleichselemente 10 und 11 entfallen. Die translatorische Lagerung des Gehäuses 1 ist auch allein durch die Klebstoffschicht 14 gewährleistet. Bevorzugt ist die Klebeschicht 14 dann großflächiger auf eine Seitenfläche 13 des Gehäuses 1 aufgebracht.

Die Verwendung einer abgedeckten Klebstoffschicht 15.1 gemäß Figur 3 hat den großen Vorteil, daß bei der Demontage des Gehäuses 1 keine Klebstoffrückstände an dem Schlitten 5 zurückbleiben können.

Die Längenausgleichselemente 10, 11, 12 können auch in das Gehäuse 1 integriert oder direkt vom Gehäuse 1 gebildet werden.

Der Trägerkörper kann auch nur eine Schiene sein, mit der die Maßverkörperung am Schlitten oder am Bett der Werkzeugmaschine erfindungsgemäß befestigt wird.

Die hochelastische Schicht 14, 15 ist senkrecht zur Meßrichtung X betrachtet etwa 0,1 mm dick. Dies gewährleistet, daß eine optimale Ausdehnung in Meßrichtung X gewährleistet ist, ohne daß Zwangskräfte ausgeübt werden.

## Patentansprüche

1. Positionsmeßeinrichtung zum Messen der Relativlage zweier Objekte (5, 6), bei der ein Trägerkörper (1) mit einer Maßverkörperung (2) am einen Objekt (5) befestigt ist und von einer am anderen Objekt (6) angebrachten Abtasteinrichtung (4) abgetastet wird, wobei der Trägerkörper (1) an zumindest einer Stelle (E1, E2, S) über ein Längenausgleichselement (10, 11, 12) zur translatorischen Lagerung des Trägerkörpers (1) an dem einen Objekt (5) befestigt ist, und sich der Trägerkörper (1) dabei zumindest mit einem Flächenbereich (13) am einen Objekt (5) abstützt, der von der Befestigungsstelle (E1, E2, S) beabstandet angeordnet ist, dadurch gekennzeichnet, daß in diesem Auflagebereich (A) der Trägerkörper (1) mit einer hochelastischen Schicht (14, 15) versehen ist.

2. Positionsmeßeinrichtung nach Anspruch 1, dadurch gekennzeichnet, daß die hochelastische Schicht eine Klebstoffschicht (14) ist.

3. Positionsmeßeinrichtung nach Anspruch 1, dadurch gekennzeichnet, daß die hochelastische Schicht eine Klebstoffschicht (15.1) mit einer darauf angebrachten Gleitschicht (15.2) ist, wobei die Gleitschicht (15.2) an dem einen Objekt (5) anliegt, an dem der Trägerkörper (1) befestigt ist und die Klebstoffschicht (15.1) zwischen einer Fläche (13) des Trägerkörpers (1) und der Gleitschicht (15.2) vorgesehen ist.

4. Positionsmeßeinrichtung nach Anspruch 3, dadurch gekennzeichnet, daß die Gleitschicht das Schutzpapier (15.2) einer Klebefolie (15.1) ist.

5. Positionsmeßeinrichtung nach einem der Ansprüche 1 bis 4, dadurch gekennzeichnet, daß die hochelastische Schicht (14, 15) streifenförmig in Meßrichtung X verlaufend auf dem Trägerkörper (1) aufgebracht ist.

6. Positionsmeßeinrichtung nach Anspruch 5, dadurch gekennzeichnet, daß der Auflagebereich (A) mit der hochelastischen Schicht (14, 15) von der Befestigungsstelle (E1, E2, S) senkrecht zur Meßrichtung (X) beabstandet vorgesehen ist.

7. Positionsmeßeinrichtung nach Anspruch 6, dadurch gekennzeichnet, daß der Trägerkörper (1) derart ausgebildet ist, daß eine Fläche (13) des Trägerkörpers (1) zwischen dem Auflagebereich (A) und der Befestigungsstellen (E1, E2, S) von der Oberfläche des einen Objektes (5) beabstandet ist.

8. Positionsmeßeinrichtung nach einem der vorhergehenden Ansprüche, dadurch gekennzeichnet, daß der Trägerkörper ein Hohlkörper (1) ist, in dessen Innenraum die Maßverkörperung (2) geschützt befestigt ist.

9. Positionsmeßeinrichtung nach Anspruch 8, dadurch gekennzeichnet, daß die Maßverkörperung (2) im Hohlkörper (1) über elastische Mittel (8) befestigt ist, so daß thermisch bedingte Längenänderungen des Hohlkörpers (1) im wesentlichen unabhängig von der Maßverkörperung (2) in Meßrichtung (X) ermöglicht werden.

10. Positionsmeßeinrichtung nach einem der vorhergehenden Ansprüche, dadurch gekennzeichnet, daß das Gehäuse ausschließlich an einer Stelle (M) starr mit dem einen Objekt befestigt ist.

## Claims

1. A position measuring device for measuring the relative position of two objects (5, 6), in which a support body (1) with a measuring entity (2) is fixed on one body and is sensed by a sensing device (4) fitted on the other object (6), wherein the support body (1) is fixed at at least one place (E1, E2, S) to the one object (5) through a length compensation element (10, 11, 12) for translational mounting of the support body (1), and the support body (1) bears at a flat region (13) which is spaced from the fixing place (El, E2, S) on the one object (5), characterized in that the support body (1) is provided in this support region (A) with a highly elastic layer (14, 15).

2. A position measuring device according to claim 1, characterized in that the highly elastic layer is an adhesive layer (14).

3. A position measuring device according to claim 1, characterized in that the highly elastic layer is an adhesive layer (15.1) with a sliding layer (15.2) applied thereto, wherein the sliding layer (15.2) bears on the one object (5) to which the support body (1) is attached and the adhesive layer (15.1) is provided between a surface (13) of the support body (1) and the sliding layer (15.2).

4. A position measuring device according to claim 3, characterized in that the sliding layer is the protective paper (15.2) of an adhesive film (15.1).

5. A position measuring device according to any of claims 1 to 4, characterized in that the highly elastic layer (14, 15) is applied to the support body (1) in strip form, running in the measuring direction X.

6. A position measuring device according to claim 5, characterized in that the support region (A) with the highly elastic layer (14, 15) is offset from the fixing place (El, E2, S) perpendicular to the measuring direction (X).

7. A position measuring device according to claim 6, characterized in that the support body (1) is so formed that a surface (13) of the support body (1) between the support region (A) and the fixing places (E1, E2, S) is spaced from the surface of the one object (5).

8. A position measunng device according to any of the prcceding claims, charactenzed in that the support body is a hollow body (1), in whose interior the measunng entity (2) is fixed under protection.

9. A position measunng device according to claim 8, characterized in that the measuring unit (2) is fixed in the hollow body (1) by elastic means (8), so that thermally induced alterations in length of the hollow body (1) in the measuring direction (X) are facilitated substantially independently of the measuring entity (2).

10. A position measuring device according to any of the preceding claims, characterized in that the housing is rigidly fixed to the one object solely at one place (M).

## Revendications

1. Dispositif de mesure de positions pour la mesure de la position relative de deux objets (5, 6), dans lequel un élément-support (1) portant une mesure matérialisée (2) est fixé l'un des objets (5) et est palpé par un dispositif de palpage (4) monté sur l'autre objet (6), l'élément-support (1) étant fixé à l'un des objets (5), en au moins un point (E1, E2, S), par l'intermédiaire d'un élément de compensation longitudinale (10, 11, 12) assurant le montage mobile en translation de l'élément-support (1) et l'élément-support (1) prenant appui sur l'objet (5) par une partie de surface (13) qui est disposée à distance du point de fixation (E1, E2, S), caractérisé par le fait que dans cette partie d'appui (A), l'élément-support (1) est pourvu d'une couche (14, 15) à haute élasticité.

2. Dispositif de mesure de positions selon la revendication 1, caractérisé par le fait que la couche à haute élasticité est une couche d'adhésif (14).

3. Dispositif de mesure de positions selon la revendication 1, caractérisé par le fait que la couche à haute élasticité est une couche d'adhésif (15.1) avec une couche de glissement (15.2) appliquée sur celle-ci, la couche de glissement (15.2) étant en contact avec l'objet (5) auquel l'élément-support (1) est fixé et la couche d'adhésif (15.1) étant prévue entre une surface (13) de l'élément-support (1) et la couche de glissement (15.2).

4. Dispositif de mesure de positions selon la revendication 3, caractérisé par le fait que la couche de glissement est le papier de protection (15.2) d'une feuille adhésive (15.1).

5. Dispositif de mesure de positions selon une des revendications 1 à 4, caractérisé par le fait que la couche à haute élasticité (14, 15) est appliquée sur l'élément-support (1) sous la forme d'une bande s'étendant dans la direction de mesure X.

6. Dispositif de mesure de positions selon la revendication 5, caractérisé par le fait que la zone d'appui (A) avec la couche à haute élasticité (14, 15) est prévue à distance du point de fixation (E1, E2, S ) perpendiculairement à la direction de mesure X.

7. Dispositif de mesure de positions selon la revendication 6, caractérisé par le fait que l'élément-support (1) est agencé de manière telle qu'une surface (13) de l'élément-support (1) entre la zone d'appui (A) et le point de fixation (E1, E2, S) soit éloignée de l'objet (5).

8. Dispositif de mesure de positions selon une des revendications précédentes, caractérisé par le fait que l'élément-support est un élément creux (1), dans la chambre intérieure duquel la mesure matérialisée (2) est fixée de manière protégée.

9. Dispositif de mesure de positions selon la revendication 8, caractérisé par le fait que la mesure matérialisée (2) est fixée dans l'élément creux (1) par l'intermédiaire de moyens élastiques (8), permettant ainsi des variations de longueur d'origine thermique de l'élément creux (1) dans la direction de mesure (X) indépendamment de la mesure matérialisée (2).

10. Dispositif de mesure de positions selon une des revendications précédentes, caractérisé par le fait que le boîtier est fixé rigidement à l'un des objets exclusivement en un point (M).
